# EUROPEAN PATENT SPECIFICATION

(11) **EP 2 965 981 B1**
(45) Date of publication and mention of the grant of the patent: **25.01.2017**
(21) Application number: 14176833.3
(22) Date of filing: 11.07.2014
(51) Int. Cl.: B62K 19/30, B62K 19/32, B62K 21/06, B62J 99/00

(54) **Bicycle**
Fahrrad
Bicyclette

(43) Date of publication of application: 13.01.2016
(73) Proprietor: Neco Technology Industry Co., Ltd., Taichung City 41361 (TW)
(72) Inventor: Wang, Yu-Hsin, 414 Taichung City (TW)
(74) Representative: Lang, Christian

(56) References cited:
- EP-A2- 1 598 263
- EP-A2- 1 634 805
- WO-A1-2012/168781
- GB-A- 2 494 714

## Description

### BACKGROUND OF THE INVENTION

### Field of the Invention

The present invention relates to a bicycle with a head parts assembly, and more particularly to a bicycle with a head parts assembly with a cable collecting device.

### Description of the Prior Art

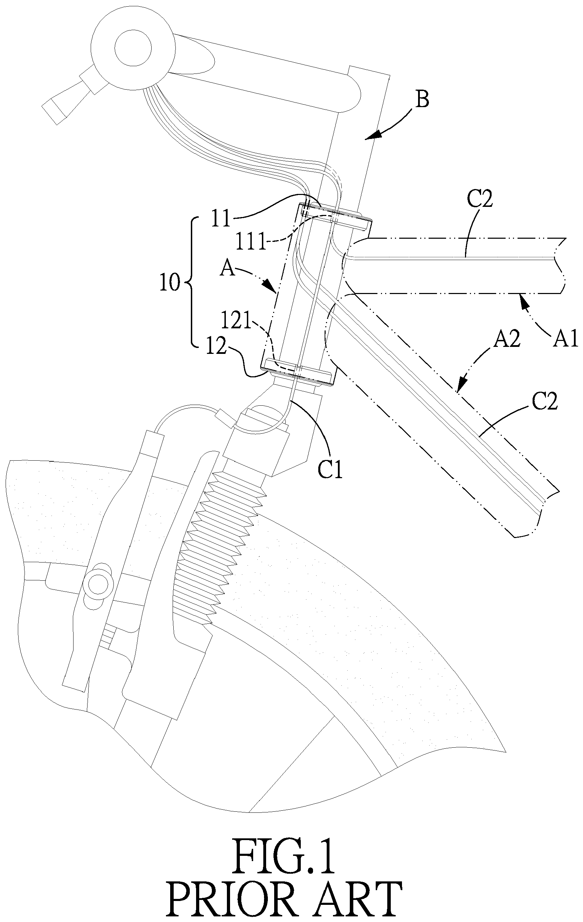

As shown in Fig. 1, a conventional bicycle head parts assembly 10 is disposed at two ends of the front frame pipe A to allow for free rotation of the front vertical pipe B with respect to the front frame pipe A. Normally, the brake cables have one ends fixed to the handle bar of the bicycle, and are clamped by a cable-clamping device and then extend along the pipes of the bicycle frame to the front and rear wheels. However, the brake cables are collected at the top tube and the down tube, so the brake cables at the front frame pipe A look very messy, which not only affects the appearance of the bicycle, but also causes safety concerns since the messy brake cables are likely to hook something.

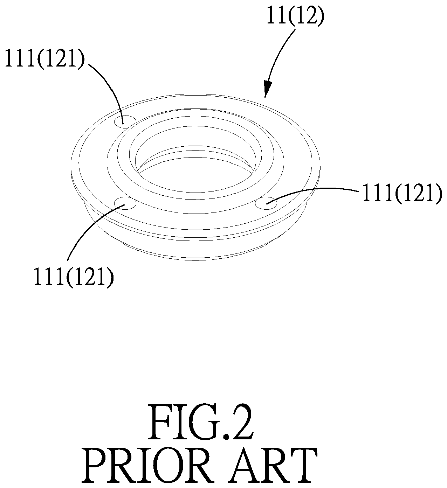

To solve the above problem, the author of the present application has invented a "head parts assembly for a bicycle", as shown in Figs. 1 and 2. The head parts assembly 10 comprises an upper bowl 11 and a lower bowl 12, each of which is formed with a plurality of holes 111, 121 extending in the axial direction of the front vertical pipe B. The front wheel brake cables C1 are inserted through the holes 111, 121 and therefore collected in the front frame pipe A. The front vertical pipe B extends to the front wheel brake mechanism. The rear wheel brake cables C2 are inserted through the holes 111 of the upper bowl 11 and into the front frame pipe A, and then run through the top tube A1 and the down tube A2 and finally extend to the rear wheel brake mechanism, so that the brake cables are disposed in a hidden manner to solve the abovementioned problems.

It is to be noted that the holes 111, 121 of the head parts assembly 10 provided for insertion of the brake cables are formed in the vertical direction, so that rain or other liquids are likely to flow through the holes into the front frame pipe A or even into the top tube A1 and the down tube A2, causing corrosion.

From document EP 1 634 805 A2, on which the preamble of independent claim 1 is based, a bicycle headset is known, comprising an adjustable member and a fastening member, wherein in an assembled state a bicycle fork steering tube passes through the adjustable member and the fastening member. The fastening member engages with the adjustable member and both form a section of the top part of the bicycle headset. Further, each of the fastening member and adjustable member comprises a through hole through their respective outer surface, such that in the assembled state of the headset both through holes communicate with each other so that brake cables of the bicycle handlebar can be guided to the internal of the headset.

From document WO 2012 / 168781 A1 a bicycle fork is known, comprising a fork body, a steering tube connected to the fork body and a stem attached to the steering tube of the fork, when the fork is mounted to a bicycle frame. The stem comprises a through hole placed on the top part of the stem through which brake cables can be guided into the internal of the bicycle frame.

From document EP 1 598 263 A2 a bicycle headset structure is known, comprising a handlebar attachment member and a tubular spacer. The tubular spacer is attached to the top part of the headset and is connected to the handlebar attachment member. The tubular spacer has a cylindrical shape and accommodates the steering tube of a bicycle fork. On the inner wall of the tubular spacer a recess is formed along the cylinder axis of the spacer. The handlebar attachment member has a through hole which, in the assembled state of the headset, communicates with the axial recess of the tubular spacer, through which cables from the handlebar can be guided to the internal of the bicycle frame.

Form GB 2 494 714 A a bicycle headset structure is known, comprising a bearing connected to the bicycle frame and a headset clamp connected to the bearing member and connecting means to be connected to the stem of the handlebar. The headset clamp further comprises a tubular top section member that is inserted into the internal of the headset clamp and that defines an internal passage through the headset clamp and that comprises through holes located on the top surface of the top section member communicating with the passage. Through the through hole and the passage cables from the handlebar can be guided into the internal of the bicycle frame.

### SUMMARY OF THE INVENTION

The primary objective of the present invention is to improve the prior art and to mitigate and/or obviate the afore-described disadvantages and to provide an appropriate bicycle with a head parts assembly with a cable collecting device.

This object is solved by a bicycle as defined in claim 1. Advantageous embodiments are described in the pending claims.

In the head parts assembly with a cable collecting device of the bicycle according to the invention the penetrating holes are formed on the annular wall of the assembling portion of the bowl, which can prevent water or other liquid from flowing into the head parts assembly of the bicycle. Therefore, the head parts assembly with a cable collecting device of the bicycle in accordance with the present invention is kind of waterproof. Besides, the brake cables are hidden in the pipe of the bicycle frame, which not only improves the aesthetic appearance of the bicycle, but also enhances riding safety.

To achieve the above objective, the present invention provides a bicycle as set out in independent claim 1.

Preferably, as described in dependent claim 2 the two ends of each of the penetrating holes are arranged in a staggered manner, making it difficult for liquid to enter the bowl, and improving the waterproof performance of the head parts assembly.

### BRIEF DESCRIPTION OF THE DRAWINGS

Fig. 1 shows a conventional bicycle head parts assembly;
Fig. 2 shows the bowl of the conventional bicycle head parts assembly formed with holes;
Fig. 3 is an exploded view of a head parts assembly with a cable collecting device of a bicycle in accordance with the present invention;
Fig. 4 is a perspective view showing that the head parts assembly with a cable collecting device is mounted on the bicycle in accordance with the present invention;
Fig. 5 is a cross sectional view of a bowl of the head parts assembly with a cable collecting device of the bicycle in accordance with the present invention;
Fig. 6 is an exploded view showing the bowl and waterproof plugs of the head parts assembly with a cable collecting device of the bicycle in accordance with the present invention;
Fig. 7 shows that the waterproof plugs are plugged in the bowl of the head parts assembly with a cable collecting device of the bicycle in accordance with the present invention; and
Fig. 8 is an illustrative view showing that the waterproof plugs are plugged in the bowl of the head parts assembly with a cable collecting device of the bicycle in accordance with the present invention.

### DETAILED DESCRIPTION OF THE PREFERRED EMBODIMENTS

The present invention will be clearer from the following description when viewed together with the accompanying drawings, which show, for purpose of illustrations only, the preferred embodiment in accordance with the present invention.

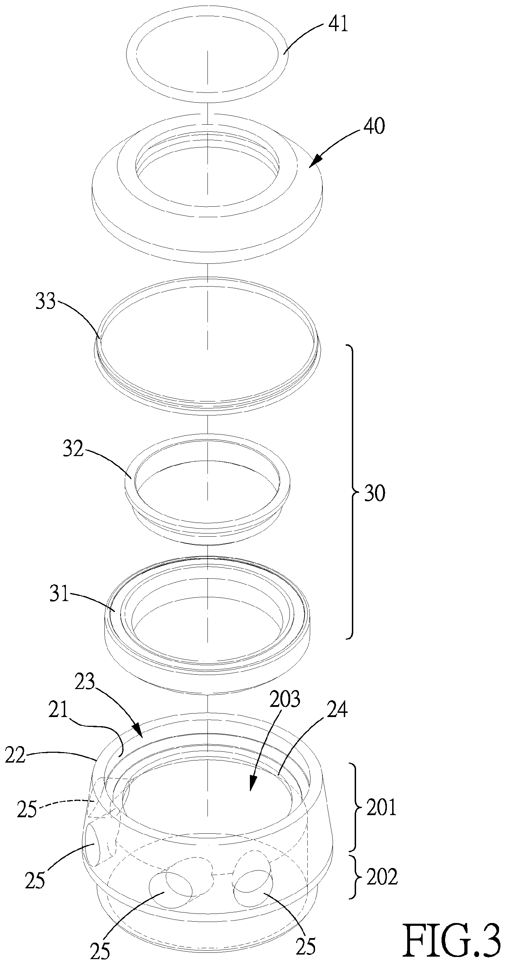

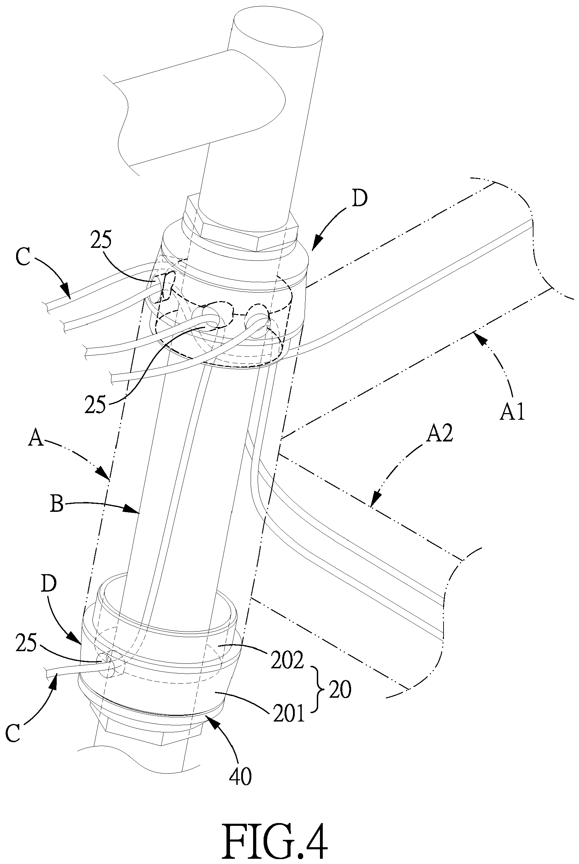

Referring to Figs. 3-8, a head parts assembly with a cable collecting device of a bicycle in accordance with the present invention comprises two bowl assemblies D for enabling a front frame pipe A to be assembled to the front vertical pipe B, and for collecting the brake cables C. The two bowl assemblies D are disposed at two ends of the front frame pipe A, and each comprises a bowl 20, a bearing 30 disposed between the bowl 20 and the front vertical pipe B, and a cover 40 for fixing the bearing 30 inside the bowl 20.

As shown in Figs. 3-5, the bearing 30 includes a bearing body 31, an inserting member 32 and a restricting member 33. The bearing body 31 is disposed on an annular rib 24 which is formed at an assembling portion 201 of the bowl 20. The inserting member 32 and the restricting member 33 are then disposed on the bearing body 31. The cover 40 is screwed to the restricting member 33 to restrict the bearing 30 within the assembling portion 201 of the bowl 20. Between the cover 40 and the restricting member 33 is disposed a washer 41 as a waterproof and dustproof seal. The bearing 30 is sleeved onto the front vertical pipe B and disposed between the front vertical pipe B and the front frame pipe A.

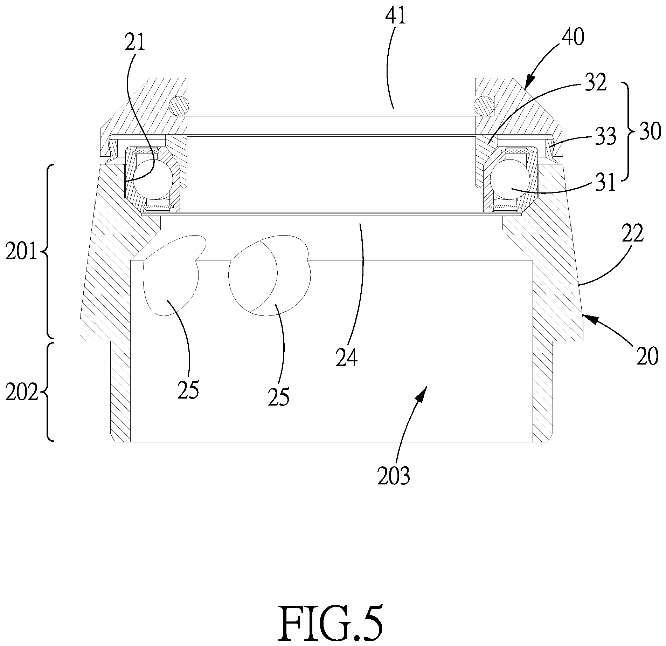

The bowl 20, as shown in Figs. 3 and 5, includes the assembling portion 201 and an engaging portion 202 tapering from the assembling portion 201. The assembling portion 201 and the engaging portion 202 define an inner space 203. The engaging portion 202 is provided for engaging with one end of the front frame pipe A. The assembling portion 201 is an annular structure and defines an opening 23. The annular rib 24 is formed on an inner surface of the assembling portion 201. The bearing 30 is restricted in the opening 23 by the cover 40 and fixed between the annular rib 24 and the cover 40.

The assembling portion 201 is formed with a plurality of penetrating holes 25 which penetrate an inner surface 21 and an outer surface 22 of the assembling portion 201 and are located between the annular rib 24 and the engaging portion 202. The brake cables C can be inserted into the front frame pipe A via the penetrating holes 25, and arranging the penetrating holes 25 on the annular wall of the assembling portion 201 can prevent water or other liquid from flowing into the head parts assembly of the bicycle. Therefore, the head parts assembly with a cable collecting device of the bicycle in accordance with the present invention is kind of waterproof.

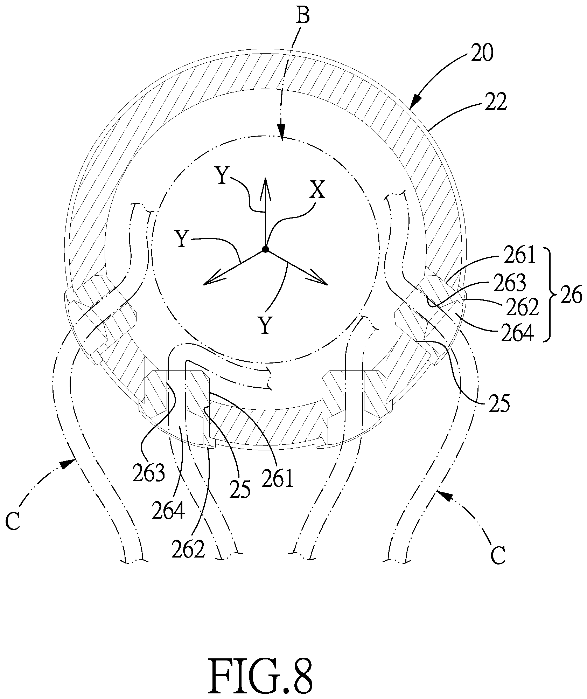

Referring to Fig. 3, the bowl 20 includes four penetrating holes 25, and the number of the penetrating holes 25 can be adjusted as desired. As shown in Fig. 8, a direction in which the front frame pipe A extends is defined as an axial direction X, and directions emanating from the axial direction X and perpendicular to it are defined as radial directions a Y.

The penetrating holes 25 are formed in the assembling portion 201 and misaligned from the radial directions Y, so that the two ends of each of the penetrating holes 25 are arranged in a staggered manner, making it difficult for liquid to enter the bowl 20, improving the waterproof performance of the head parts assembly.

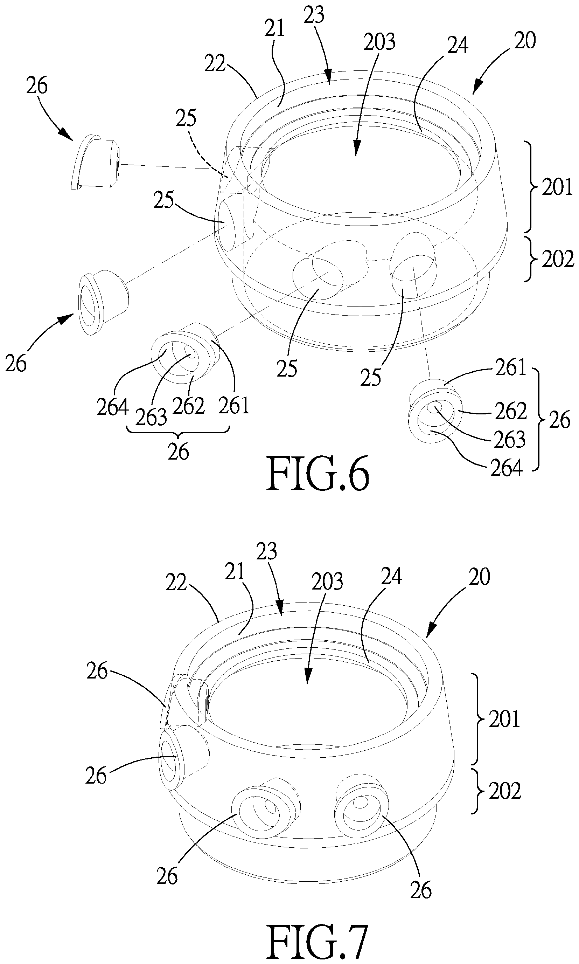

Referring then to Figs. 6-8, each of the penetrating holes 25 of the bowl 20 is plugged with a waterproof plug 26 which can be made of, but not limited to rubber. Each of the waterproof plugs 26 includes a plug portion 261 to be inserted in the penetrating holes 25, a head portion 262 formed at one end of the plug portion 261 and larger than the penetrating holes 25, and a passage 263 running through the plug portion 261 and the head portion 262. Each of the waterproof plugs 26 is deposed on the bowl 20 in such a manner that the plug portion 261 is inserted in a corresponding one of the penetrating holes 25 and the head portion 262 is abutted against the outer surface 22 of the assembling portion 201. The brake cables C are inserted into the front frame pipe A via the passage 263 of the head portion 262 of the waterproof plugs 26, then extend through the front frame pipe A and the upper and down tubes A1, A2, and are finally connected to the front and rear wheel brake mechanisms. In this embodiment, the head portion 262 of the waterproof plug 26 can further be provided with a recess 264, and the passage 263 extends from the bottom of the recess 264 to the plug portion 261. The recess 264 acts as a stop structure stopping liquid from entering the head parts assembly.

While we have shown and described various embodiments in accordance with the present invention, it is clear to those skilled in the art that further embodiments may be made without departing from the scope of the present invention as defined in the appended claims.

## Claims

1. A bicycle with a head parts assembly with a cable collecting device comprising two bowl assemblies (D) disposed at two ends of a front frame pipe (A) of the bicycle to collect brake cables (C), each of the bowl assemblies (D) comprising a bowl (20), a bearing (30) disposed between the bowl (20) and the front vertical pipe (B) of the bicycle, and a cover (40) for fixing the bearing (30) inside the bowl (20), wherein each bowl (20) includes an assembling portion (201) and an engaging portion (202) tapering from the assembling portion (201), each assembling portion (201) and each engaging portion (202) define an inner space (203), each engaging portion (202) is provided for engaging with one end of the front frame pipe (A), each assembling portion (201) is an annular structure and defines an opening (23), an annular rib (24) is formed on an inner surface of each assembling portion (201), each bearing (30) is restricted in the respective opening (23) by the respective cover (40) and fixed between the respective annular rib (24) and the respective cover (40),
**characterized in that**
each assembling portion (201) is formed with a plurality of penetrating holes (25) which penetrate the inner surface (21) and an outer surface (22) of the assembling portion (201) and are located between the respective annular rib (24) and the respective engaging portion (202), and the brake cables (C) are inserted into the front frame pipe (A) via the penetrating holes (25).

2. The bicycle as claimed in claim 1, wherein a direction in which the front frame pipe (A) extends is defined as an axial direction (X), directions emanating from the axial direction (X) and perpendicular to it are defined as radial directions (Y), and the penetrating holes (25) are misaligned from the radial directions (Y).

3. The bicycle as claimed in claim 1, wherein each of the penetrating holes (25) of each bowl (20) is plugged with a waterproof plug (26) which includes a plug portion (261) to be inserted in the respective penetrating hole (25), a head portion (262) formed at one end of the plug portion (261), and a passage (263) running through the plug portion (261) and the head portion (262), each of the waterproof plugs (26) is deposed on the respective bowl (20) in such a manner that the plug portion (261) is inserted in a corresponding one of the penetrating holes (25) and the head portion (262) is abutted against the outer surface (22) of the respective assembling portion (201), and the brake cables (C) are inserted into the front frame pipe (A) via the passage (263) of the head portion (262) of the waterproof plugs (26).

4. The bicycle as claimed in claim 3, wherein the head portion (262) of each of the waterproof plugs (26) is provided with a recess (264), and each passage (263) extends from the bottom of the respective recess (264) to the respective plug portion (261).

5. The bicycle as claimed in claim 1, wherein each bearing (30) includes a bearing body (31), an inserting member (32) and a restricting member (33), each bearing body (31) is disposed on the annular rib (24) of the assembling portion (201) of the respective bowl (20), each inserting member (32) and each restricting member (33) are then disposed on the respective bearing body (31), and each cover (40) is screwed to the respective restricting member (33) to restrict the respective bearing (30) within the assembling portion (201) of the respective bowl (20).

6. The bicycle as claimed in claim 5, wherein a washer (41) is disposed between each cover (40) and the respective restricting member (33).

## Patentansprüche

1. Fahrrad mit einer Kopfteilanordnung mit einer Kabelaufnahmevorrichtung mit zwei Schalenanordnungen (D), die an zwei Enden eines vorderen Rahmenrohres (A) des Fahrrads angeordnet sind, um Bremskabel (C) aufzunehmen, wobei jede der Schalenanordnungen (D) eine Schale (20), ein Lager (30), das zwischen der Schale (20) und dem vorderen Vertikalrohr (B) des Fahrrads angeordnet ist, und eine Abdeckung (40) zum Fixieren des Lagers (30) innerhalb der Schale (20) umfasst, wobei jede Schale (20) einen Anordnungsbereich (201) und einen sich von dem Anordnungsbereich verjüngenden Eingriffsbereich (202) umfasst, wobei jeder Anordnungsbereich (201) und jeder Eingriffsbereich (202) einen inneren Raum (203) definieren, wobei jeder Eingriffsbereich (202) für den Eingriff mit einem Ende des vorderen Rahmenrohres (A) vorgesehen ist, wobei jeder Anordnungsbereich (201) eine ringförmige Struktur ist und eine Öffnung (23) definiert, wobei eine ringförmige Rippe (24) an einer inneren Flache eines jeden Anordnungsbereichs (201) ausgebildet ist, wobei jedes Lager (30) in der jeweiligen Öffnung (23) durch die jeweilige Abdeckung (40) eingeschränkt und zwischen der jeweiligen ringförmigen Rippe (24) und der jeweiligen Abdeckung (40) fixiert ist,
**dadurch gekennzeichnet, dass**
jeder Anordnungsbereich (201) mit einer Vielzahl von Durchgangsöffnungen (25) ausgebildet ist, welche die innere Fläche (21) und eine äußere Fläche (22) des Anordnungsbereichs (201) durchdringen und zwischen der jeweiligen ringförmigen Rippe (24) und dem jeweiligen Eingriffsbereich (202) angeordnet sind, und wobei die Bremskabel (C) über die Durchgangsöffnungen (25) in das vordere Rahmenrohr (H) eingeführt sind.

2. Fahrrad nach Anspruch 1, bei welchem eine Richtung, in der sich das vordere Rahmenrohr (A) erstreckt, als eine axiale Richtung (X) definiert ist, wobei senkrecht zur axialen Richtung (X) ausstrahlende Richtungen als Radialrichtungen (Y) definiert sind, und wobei die Durchgangsöffnungen (25) nicht fluchtend zu den radialen Richtungen (Y) ausgerichtet sind.

3. Fahrrad nach Anspruch 1, bei welchem jede Durchgangsöffnung (25) einer jeden Schale (20) mit einem wasserdichten Stöpsel (26) verstöpselt ist, welcher einen Stöpselbereich (261) zur Einführung in die jeweilige Durchgangsöffnung (25), einen Kopfbereich (62), der an einem Ende des Stöpselbereichs (261) ausgebildet ist, und einen Durchgang (263) aufweist, der durch den Stöpselbereich (261) und den Kopfbereich (262) hindurch verläuft, wobei jeder der wasserdichten Stöpsel (26) an der jeweiligen Schale (20) derart angeordnet ist, dass der Stöpselbereich (261) in einer entsprechenden der Durchgangsöffnungen (25) eingeführt ist und der Kopfbereich (262) gegen die äußere Fläche (22) des jeweiligen Anordnungsbereichs (201) anliegt, und wobei die Bremskabel (C) in das vordere Rahmenrohr (H) über den Durchgang (263) des Kopfbereichs (262) des wasserdichten Stöpsels (26) eingeführt sind.

4. Fahrrad nach Anspruch 3, bei welchem der Kopfbereich (262) eines jeden wasserdichten Stöpsels (26) eine Aussparung (264) aufweist, und wobei jeder Durchgang (263) sich von dem Boden der jeweiligen Aussparung (264) zu dem jeweiligen Stöpselbereich (261) erstreckt.

5. Fahrrad nach Anspruch 1, bei welchem jedes Lager (30) einen Lagerkörper (31), ein Einführelement (32) und ein Begrenzungselement (33) aufweist, wobei jeder Lagerkörper (31) an der ringförmigen Rippe (24) des Anordnungsbereichs (201) der jeweiligen Schale (20) angeordnet ist, wobei jedes Einführungselement (32) und jedes Begrenzungselement (33) darauffolgend an dem jeweiligen Lagerkörper (31) angeordnet sind, und wobei jede Abdeckung (40) mit dem jeweiligen Begrenzungselement (33) verschraubt ist, um das jeweilige Lager (30) innerhalb des Anordnungsbereichs (201) der jeweiligen Schale (20) zu begrenzen.

6. Fahrrad nach Anspruch 5, bei welchem eine Unterlegscheibe (41) zwischen jeder Abdeckung (40) und dem jeweiligen Begrenzungselement (33) angeordnet ist.

## Revendications

1. Bicyclette avec un ensemble de pièces de tête avec un dispositif collecteur de câble comprenant deux ensembles de coupe (D) disposés à deux extrémités d'un tube avant du cadre (A) de la bicyclette pour rassembler des câbles de frein (C), chacun des ensembles de coupe (D) comprenant une coupe (20), un palier (30) disposé entre la coupe (20) et le tube vertical avant (B) de la bicyclette et un recouvrement (40) pour fixer le palier (30) à l'intérieur de la coupe (20), chaque coupe (20) comprenant une portion d'assemblage (201) et une portion d'engrènement (202) qui s'effile à partir de la portion d'assemblage (201), chaque portion d'assemblage (201) et chaque portion d'engrènement (202) définissant un espace intérieur (203), chaque portion d'engrènement (202) étant prévue pour s'engrener avec une extrémité du tube avant du cadre (A), chaque portion d'assemblage (201) étant une structure annulaire et définissant une ouverture (23), une nervure annulaire (24) étant formée sur une surface intérieure de chaque portion d'assemblage (201), chaque palier (30) étant limité dans l'ouverture respective (23) par le recouvrement respectif (40) et fixé entre la nervure annulaire respective (24) et le recouvrement respectif (40), **caractérisée en ce que** chaque portion d'assemblage (201) est formée avec une pluralité de trous de pénétration (25) qui pénètrent dans la surface intérieure (21) et une surface extérieure (22) de la portion d'assemblage (201) et qui sont situés entre la nervure annulaire respective (24) et la portion d'engrènement respective (202) et les câbles de frein (C) sont insérés dans le tube avant du cadre (A) par l'intermédiaire des trous de pénétration (25).

2. Bicyclette selon la revendication 1, une direction dans laquelle le tube avant du cadre (A) s'étend étant définie comme une direction axiale (X), des directions qui partent de la direction axiale (X) et qui sont perpendiculaires à celle-ci étant définies comme directions radiales (Y) et les trous de pénétration (25) étant désalignés des directions radiales (Y).

3. Bicyclette selon la revendication 1, chacun des trous de pénétration (25) de chaque coupe (20) étant bouché par un bouchon étanche à l'eau (26) qui comprend une portion de bouchon (261) à insérer dans le trou de pénétration respectif (25), une portion de tête (262) formée à une extrémité de la portion de bouchon (261) et un passage (263) traversant la portion de bouchon (261) et la portion de tête (262), chacun des bouchons étanches à l'eau (26) étant déposé sur la coupe respective (20) de telle manière que la portion de bouchon (261) est insérée dans une portion correspondante des trous de pénétration (25) et la portion de tête (262) étant en butée contre la surface extérieure (22) de la portion d'assemblage respective (201) et les câbles de frein (C) étant insérés dans le tube avant du cadre (A) par l'intermédiaire du passage (263) de la portion de tête (262) des bouchons étanches à l'eau (26).

4. Bicyclette selon la revendication 3, la portion de tête (262) de chacun des bouchons étanches à l'eau (26) étant pourvue d'un évidement (264) et chaque passage (263) s'étendant du fond de l'évidement respectif (264) vers la portion de bouchon respective (261).

5. Bicyclette selon la revendication 1, chaque palier (30) comprenant un corps de palier (31), un organe d'insertion (32) et un élément de limitation (33), chaque corps de palier (31) étant disposé sur la nervure annulaire (24) de la portion d'assemblage (201) de la coupe respective (20), chaque organe d'insertion (32) et chaque élément de limitation (33) étant ensuite disposés sur le corps de palier respectif (31) et chaque recouvrement (40) étant vissé à l'organe de limitation respectif (33) pour limiter le palier respectif (30) à l'intérieur de la portion d'assemblage (201) de la coupe respective (20).

6. Bicyclette selon la revendication 5, un joint (41) étant disposé entre chaque recouvrement (40) et l'organe de limitation respectif (33).
